# EUROPEAN PATENT APPLICATION

(11) **EP 3 272 723 A1**
(43) Date of publication of application: **24.01.2018**
(21) Application number: 17462002.1
(22) Date of filing: 20.07.2017
(51) Int. Cl.: C04B 28/02, C04B 18/02, C04B 18/28, C04B 20/10

(54) **METHOD FOR PRODUCING AND APPLICATION OF HYDROPHOBIC AND IMPERMEABLE PRODUCTS AND ADDITIVES**

(30) Priority: 22.07.2016 HU 1600463
(71) Applicant: Light Concrete Services KFT, 2022 Tahitótfalu (HU)
(72) Inventor: LOVAS, Sándor, 1015 Budapest (HU)
(74) Representative: Varga, Tamas Péter

(57) **Abstract**

The subject of the invention is a method for producing and application of hydrophobic and impermeable products and additives, which method allows to make any absorbent powdered material having particle structure 0-8 mm hydrophobic, and the product thus created can be used in the construction industry and in the field of environmental protection.

The method according to the invention is characterised by that, while performing the method, quicklime powder (6) is mixed in a suitable reactor (7) with any absorbent additive powder having 0-8 mm particle size, then hydrating suspension (5) is added to it while agitating continuously, which is a mixture of vegetable oil (2), emulsifier (3) and water (1), as a result of which a quick exothermic reaction takes place in the given case at 90-120 °C, the quicklime powder (6) in the reactor and the admixed additive becomes hydrophobic after the reaction has taken place, the produced material is insoluble in water, and the steam generated during the reaction is passed through a dust separating cyclone (8) into a precipitating space (15), then through a water tank (21) back into the reactor (7), and in this way, hydrophobic materials are produced during the reaction, which can be used in the construction industry as hydrophobic additives, as well as reusable oil absorbers in certain cases.

## Description

The subject of the invention is a method for producing and application of hydrophobic and impermeable products and additives, which method allows to make any absorbent powdered material having particle structure 0-8 mm hydrophobic, and the product thus created can be used in the construction industry and in the field of environmental protection.

During the method according to the invention, quicklime powder is mixed in a suitable reactor with any absorbent powder having 0-8 mm particle size (e.g. diatomaceous earth, perlite, bentonite, flaked cellulose, sawdust, etc.), then a hydrating suspension, which a mixture of vegetable oil, emulsifier and water, while agitating the mixture continuously. A quick exothermic reaction takes place (at 90 - 120 °C), the CaO in the reactor and the additive becomes hydrophobic as the reaction is completed, a hydrophobic substance is produced, which is not soluble in water. The steam generated during the reaction is passed through a powder separating cyclone into a precipitator, then it is returned to the reactor through a water tank. The hydrophobic materials generated during the reaction can be used as additives in the construction industry, and also as reusable oil absorbing agent in certain cases.

According to the state of art the Hungarian patent HU 223 711 (Kátay J., 2001-07-12) makes known a procedure for making additive, concrete and cement mortar impermeable, which additive is mixed to the cement used for preparing concrete or mortar to ensure its impermeability and water repellent property. The additive according to the invention is prepared by adding hydrophobizing agent to lime based material. During the preparation of the additive, characteristically, ground and dried lime (CaO) 28.4-85.2 % by mass, preferably 39.6-73.84 % by mass, is used, which is agitated continuously while liquid hydrophobizing agent and liquid catalyst 3.35-10.75 % by mass, preferably 4.69-8.71 % by mass, is added to it, the composition of which is liquid hydrophobizing agent 2,25-6,75 % by mass, preferably 3,15-5,85 % by mass and liquid catalyst 1.1-3.3 % by mass, preferably 1.54-1.86 % by mass. Then water is added to the agitated and uniformly blended material in an amount of 18.25-54.75 % by mass, preferably 25.55-47.45 % by mass, and subsequently, after the chemical reaction has taken place, the ready additive is dehydrated, discharged and cooled gradually and let to rest for 24 - 48 hours.

The Hungarian patent HU 227 052 (Sineol Hungary Ltd, 2006-03-03) makes known hydrophobic adsorbent material, which separates oil from water, takes up and binds oil, including methods for producing and application of it, which produced material is suitable for collecting hydrocarbons and other oil-holding contaminants and for removing such contaminants from solid surfaces and from water alike. During the method the adsorbent material is made by adding adsorbing agent to lime based material, while ground and dried lime (CaO) is used as base material during the production of additive. The method is characterised by that, ground and dried lime (CaO) is used as base material during the production of the additive in an amount of 29.3-86.2 % by mass, preferably 39.1-72.84% by mass, to which liquid adsorbing agent and liquid catalyst is added as auxiliary material during continuous agitation in an amount of 3.45-11.75 % by mass, preferably 4.12-9.21 % by mass, the composition of which is liquid adsorbing agent in and amount of 2.95-7.75 % by mass, preferably 4.15-5.85 % by mass, and liquid catalyst in an amount of 1.2-3.4 % by mass, preferably 1.34-1.76 % by mass, and then water and stabilizer is added to the agitated and uniformly blended material during further continuous agitation in an amount of 18.25-55.75 % by mass, preferably 26.55-48.45 % by mass, then, after the chemical reaction has taken place, the ready adsorbent material is dehydrated, discharged, cooled gradually, and let to rest for 24-48 hours.

The Hungarian HU 227 463 (Lasso Ltd. 2008.04.26.) patent makes known a light concrete, having bulk density below 500 kg/m3, featuring thermal insulating, fire retarding, impermeable, air permeable, flexible properties, which is made with polystyrene pearls, and it is suitable for thermal insulation and sound control of renovated old buildings and new building, as well as for decreasing the water permeability or absorbing ability, and for improving the fire resistance of the buildings, while maintaining the air and water vapour permeability. Its composition: polystyrene pearl, or recycled polystyrene having particle size 1-10 mm, water, cement and organic (polymer) binder mixed with the cement: a kind of homo-, co- and terpolymer, which is soluble and/or dispersible in water. Upon the influence of the organic (polymer) binder, the polystyrene pearls become easily miscible with inorganic binder and water. The bulk density of the thermal insulating material thus produced could be up to 100 kg/m3 depending on the quantity of binders. The produced material is smearable, pumpable and pourable, it is possible to prepare board, brick or filling wall from it, and plastering can be applied on its surface if its bulk density is over 300 kg/m3. The cement can be mixed or replaced with gypsum. The polystyrene pearls can be mixed or replaced with material having low bulk density (below 400 kg/m3), which is hydrophobic and consists of particles.

The Hungarian patent P0900449 (dr. Várfalvi et al, 2009-07-20) makes known light construction material made with the use of cellulose, the mixture of which is plastic before setting and it consists of cellulose base material, mainly shredded paper, water and binder, mainly cement, and at least one additive, and solid product is prepared from the this subsequently solidifying mixture. Its essense is, that the quantity of the cellulose base material in the plastic mixture of the construction material is over 30 kg, preferably in the range 30-150 kg, in one 1 m³ of the solidified finished product, including shredded paper in an amount of 20 kg, preferably in the range 20-60 kg, and this paper base material is ground to flakes producing a condition similar to that of wad. Furthermore, the mixture contains alkali siloxane and/or acrylate based dispersion emulsion in an amount of at least 10 kg, preferably in the range 10-20 kg as additive.

The Slovakian patent SK 318-98 makes known hydrophobic mixture and method for its production and application. The hydrophobic preparation consists of pulverised quicklime in an amount of 90-94 % by mass, and the vegetable oil in an amount of 6-10 % by mass. Mode of production: The vegetable oil is added by means of spraying to a pulverised quicklime having an amount of 90-94 % while agitating it continuously. Water is added to the blend in an amount of 45-60 % while agitating it continuously. The mixture is let to dry at room temperature after the hydration has taken place. The hydrophobic preparation is used as additive of construction materials.

The Slovakian patent SK 5012-2006 makes known mixture suitable for producing hydrophobic preparations, as well as method for producing and application of the mixture. The mixture consists of vegetable oil in an amount of 3-8 % by mass, detergent in an amount of 0.15-3.5 % by mass, and the rest of the mass is quicklime powder. Mode of producing the hydrophobic preparation: The emulsion, which is a mixture of vegetable oil and detergent, is added as a fine spray to the continuously agitated quicklime. Then a quantity of water, corresponding to 40 - 80 % by mass of the paste, is added while agitating the material continuously. Upon completion of the hydration of lime, the mixture is let to dry at room temperature. The hydrophobic preparation may be used as additives of construction materials.

The disadvantage of the solutions described above is that they not allow the process to take place in a closed system, and they do not allow hydrophobizing any absorbent material, and a further disadvantage is that primarily alcohol, petrol or denatured alcohol is used as emulsifying agent.

While creating the solution according to the invention, the aim was to establish the possibility of making much more materials hydrophobic relative to the known solutions known so far, thus allowing its use in the construction industry as hydrophobizing material, and to use it extensively for the protection of environment, e.g. as oil absorbing material.

During the creation of the solution according to the invention we recognised, that if quicklime powder is mixed in a reactor with any absorbent additive powder having 0-8 mm particle size (e.g. diatomaceous earth, flaked cellulose, sawdust, etc.), then hydrating suspension is added to it while agitating continuously, which is a mixture of vegetable oil, emulsifier and water, as a result of which a quick exothermic reaction takes place (at 90-120 °C), the CaO in the reactor and the admixed additive becomes hydrophobic after the reaction has taken place, the material produced is insoluble in water, and the steam generated during the reaction is passed through a dust separating cyclone into a precipitator, then through a water tank back into the reactor for reuse, and the hydrophobic materials produced during the reaction can be used in the construction industry as additives, as well as reusable oil absorbent materials in certain cases, then the set out aim can be reached.

The invention is a method for producing of hydrophobic and impermeable products and additives, primarily for producing products that can be used in the construction industry and in the filed of environmental protection, during the method of which the powder material having a suitable particle structure is made hydrophobic. It is characterised by that, while performing the method, quicklime powder is mixed in a suitable reactor with any absorbent additive powder having 0-8 mm particle size, then hydrating suspension is added to it while agitating continuously, which is a mixture of vegetable oil, emulsifier and water, as a result of which a quick exothermic reaction takes place in the given case at 90-120 °C, the quicklime powder in the reactor and the admixed additive becomes hydrophobic after the reaction has taken place, the produced material is insoluble in water, and the steam generated during the reaction is passed through a dust separating cyclone into a precipitating space, then through a water tank back into the reactor, and in this way, hydrophobic materials are produced during the reaction, which can be used in the construction industry as hydrophobic additives, as well as reusable oil absorbers in certain cases.

In a preferred application of the method according to the invention the hydrophobic material granulate, powder is preferably, in the given case, diatomaceous earth and/or perlite and/or bentonite and/or flaked cellulose and/or sawdust.

In a further preferred application of the method according to the invention during the method the materials are used as below:
- quicklime powder (6) 20-80 % by mass,
- material to be hydrophobized (4) 0-50 % by mass,
- suspension (5) 20-80 % by mass.

In a further preferred application of the method according to the invention the composition of suspension used during the method:
- vegetable oil, or mixture of vegetable oils, containing at least 12 % saturated fatty acid, preferably sunflower oil or palm fat 3-10 % by mass,
- emulsifier 0.3-1 % by mass,
- water 89-96.7 % by mass.

In a further preferred application of the method according to the invention during the method 52.5 % by mass of quicklime powder is mixed in the reactor with 3.5 % by mass of flaked cellulose for producing the hydrophobic additive, then the hydrophobizing suspension is added during continuous agitation, which is a mixture of 4.24 % by mass of vegetable oil, 0.56 % by mass of emulsifier and 39.2 % by mass of water, while a quick exothermic reaction takes place in this case at 90-120 °C, and the quicklime powder and the flaked cellulose in the reactor becomes hydrophobic upon completion of the reaction, and the produced material in insoluble in water, the steam generated during the reaction is passed through the dust separator cyclone to a precipitating space, then through the water tank back to the reactor, and the mixture produced in this way is used as hydrophobic additive in construction materials, e.g. plaster or estrich or concrete.

In a further preferred application of the method according to the invention during the method 44 % by mass of quicklime powder is mixed in the reactor with 8.45 % by mass of flaked cellulose for producing the hydrophobic oil absorbent, then the hydrophobizing suspension is added during continuous agitation, which is a mixture of 7.12 % by mass of sunflower oil, 0.78 % by mass of emulsifier and 39.65 % by mass of water, while a quick exothermic reaction takes place in this case at 90-120 °C, and the quicklime powder and the flaked cellulose in the reactor becomes hydrophobic upon completion of the reaction, and the produced material in insoluble in water, the steam generated during the reaction is passed through the dust separator cyclone to a precipitating space, then through the water tank back to the reactor, then the obtained hydrophobic mixture is passed through bolting cloth or drum sieve preferably having 2 mm mesh size, then the retained hydrophobic cellulose, having a specific gravity of 80-100 kg/m3, is used for absorbing oil floating on water, while the fine hydrophobic powder, having a specific gravity of about 400 - 450 kg/m3, is used as additive of construction materials, mixed in, for example, in smoothing plaster and paints.

In a further preferred application of the method according to the invention 38.4 % by mass of quicklime powder and 21.4 % by mass of preferred fir sawdust is mixed in the reactor during the process of hydrophobization of sawdust, then the hydrophobizing suspension is added during continuous agitation, which in this case is a mixture of 45.2 % by mass of sunflower oil, 0.6 % by mass of emulsifier and 34.4 % by mass of water, while a quick exothermic reaction takes place in this case at 90-120 °C, and the CaO and the sawdust in the reactor becomes hydrophobic upon completion of the reaction, and the produced material in insoluble in water, the steam generated during the reaction is passed through the dust separator cyclone to a precipitating space, then through the water tank back to the reactor, and the mixture produced in this way is used as additive for improving the hydrophobic property, e.g. in structural concrete, which increases the compression strength and provides hydrophobic property to the concrete.

In a further preferred application of the method according to the invention 45.2 % by mass of quicklime powder and 13.61 % by mass of perlite is mixed in the reactor during the process of hydrophobization of perlite, then the hydrophobizing suspension is added during continuous agitation, which in is a mixture of 5.12 % by mass of sunflower oil, 0.57 % by mass of emulsifier and 35.5 % by mass of water, while a quick exothermic reaction takes place in this case at 90-120 °C, and the CaO and the perlite in the reactor becomes hydrophobic upon completion of the reaction, and the produced material in insoluble in water, the steam generated during the reaction is passed through the dust separator cyclone to a precipitating space, then through the water tank back to the reactor, and the mixture produced in this way is used as hydrophobic additive in construction material, or as hydrophobic oil absorbent.

The invention furthermore a method for the application of products produced by method according to any of the invention, which is characterised by that, the hydrophobic additives and materials produced during the method are used as dry mix of impermeable mortar, for the production of which dry mix of impermeable dry mix mortar, 20 % by mass of cement is mixed with 7 % by mass of hydrophobic mixture produced according to claim 5, and 73 % by mass of sand is added to produce impermeable dry mix mortar.

In a preferred application of the method according to the invention the hydrophobic additives and materials produced during the method are used for the production of hydrophobic concrete, for the production of which hydrophobic concrete, 20 % by mass of cement is mixed with 10 % by mass of hydrophobic mixture, and 70 % by mass of sand is added to produce hydrophobic concrete.

In another preferred application of the method according to the invention the hydrophobic additives and materials produced during the method are used for the production of hydrophobic smoothing plaster, for the production of which hydrophobic smoothing plaster, 17.5 % by mass of cement is mixed with 6.5 % by mass of hydrophobic powder, having a specific gravity of 450 kg/m3, produced according to claim 6, and 76 % by mass of fine sand is added to produce hydrophobic smoothing plaster.

In a further preferred application of the method according to the invention the hydrophobic additives and materials produced during the method are used for the production of hydrophobic cellulose based oil absorbent, which hydrophobic cellulose based oil absorbent is a hydrophobic cellulose based oil absorbent produced according to claim 6, appearing in the from of granulate, which excludes water almost entirely thanks to its hydrophobic nature, but the oil is catched, absorbed among the cellulose fibres as a result of its material properties, and the absorbing process takes place very quickly - within a few minutes - and then the granulates can be collected and transported away.

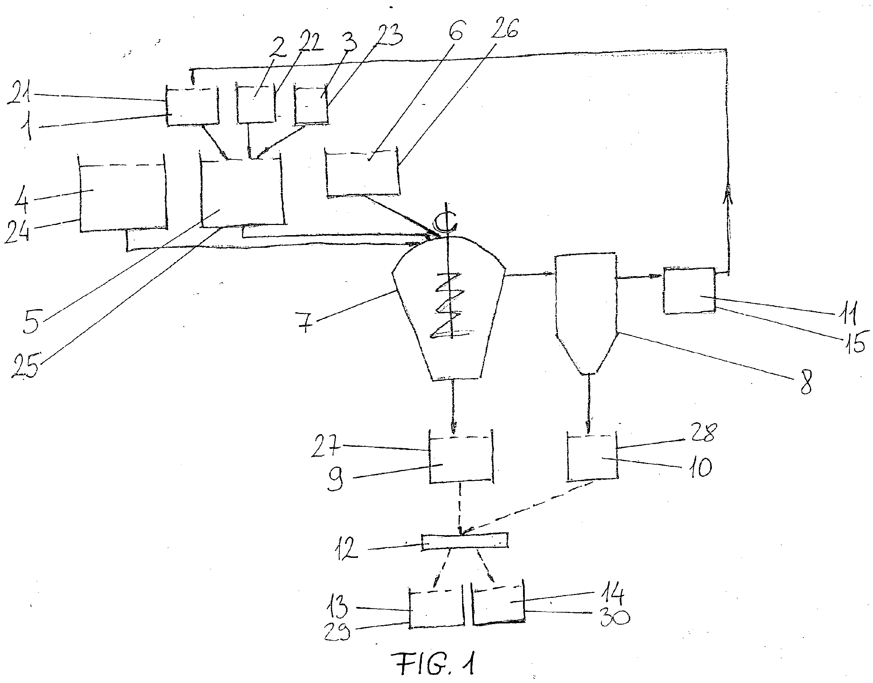

The solution according to the invention is set forth below with the attached figure: Fig. 1 shows the schematic representation of the various steps of a possible embodiment of the method according to the invention, together with the equipment used during the steps.
The water 1 in the water tank 21 can be seen in the Figure 1, together with the oil 2 in the tank 22, and the emulsifier 3 in the tank 23, and suspension 5 in the tank 25 produced as a mixture of them. Furthermore, the Figure 1 shows the material to be hydrophobized 4 in the tank 24, the suspension 5 in the tank 25, and the quicklime powder (CaO) 6 in the tank 26. The reactor 7 can also be seen, in which the materials get heated up to a temperature of 90-120 C° as a result of the reaction taking place in it. As a result of the quick exothermic reaction taking place in the reactor 7, the quicklime powder 6 and the admixed material to be hydrophobized 4 becomes hydrophobic after the reaction has taken place, and the this hydrophobic material cannot be dissolved in water.

A further detail of Fig. 1 shows the dust separating cyclone 8, through which the steam generated during the reaction is passed to the precipitating space 15, then the condensate is returned through the water tank 21 to the reactor 7. Fig. 1 also shows the mixture 9 in the tanks 27 which has become hydrophobic during the reaction taking place in the rector 7, as well as the powder 10 in the tank 28 that has come from the dust separating cyclone 8, which powder is passed through a drum sieve 12 having a mesh size of 0.8 - 2 mm preferably in this case. The product 13 in tanks 29 can also be seen in the figure, which accumulates after sieving, and it can be cellulose in the given case, that may be used for absorbing oil floating on water, and the product 14 in the further tank 30 can also be seen, that may be used as additive in the construction industry, which in the given case is a fine hydrophobic powder having a specific gravity of 400-450 kg/m3.
In case of a possible preferred realization of the process according to the invention, the quicklime powder 6 is mixed in the reactor 7 with the material to be hydrophobized 4, which may be any absorbent additive powder having 0-8 mm particle size, in the given case it may be for instance diatomaceous earth, perlite, bentonite, flaked cellulose, sawdust, etc., then a hydrating suspension 5 is added during continuous agitation, which is a mixture of vegetable oil 2 and emulsifier 1. A quick reaction takes place in reactor 7 at 90-120 °C, the quicklime powder 6 in the reactor 7 and the added material to be made hydrophobic becomes hydrophobic upon the completion of the reaction, and the material is insoluble in water. The steam generated during the reaction is passed through the dust separator cyclone 8 to the precipitating space 15, then through the water tank 21 back to the reactor 7. The mixture prepared during the reaction be can used as additive in the construction industry, and also as reusable oil absorbent in certain cases.

Materials used during the procedure:
- Quicklime powder (CaO) 20-80 % by mass
- Material to be hydrophobized (admixed material) 0-50 % by mass
- Suspension 20-80 % by mass

Composition of suspension:
- Vegetable oil or mixture of vegetable oils (containing minimum 12 % saturated fatty acid, preferably sunflower or palm fat) 3-10 % by mass
- Emulsifying agent 0.3-1 % by mass
- Water 89-96.7 % by mass

### Examples for the production of hydrophobic additives and products:

### Example 1:

### Production of hydrophobic additive:

52.5 % by mass of quicklime powder 6 is mixed in reactor 7 with 3.5 % by mass of flaked cellulose, then the hydrating suspension 5 is added during continuous agitation, which is a mixture of 4.24 % by mass of sunflower oil 2, 0.56 % by mass of emulsifier 3 and 39.2 % by mass of water 1. A quick reaction takes place (at 90-120 °C), the quicklime powder (CaO) 6 and the flaked cellulose in the reactor 7 becomes hydrophobic after the reaction has taken place, the material becomes insoluble in water 1. The steam generated during the reaction is passed through the dust separator cyclone 8 to the precipitating space 15, then through the water tank 21 back to the reactor 7. The mixture prepared in this way is used as hydrophobic additive in construction materials, e.g. plaster, estrich, concrete.

### Example 2:

### Production of hydrophobic oil absorbent:

44 % by mass of quicklime powder 6 is mixed in the reactor 7 with 8.45 % by mass of flaked cellulose, then the hydrating suspension 5 is added during continuous agitation, which is a mixture of 7.12 % by mass of sunflower oil 2, 0.78 % by mass of emulsifier 3 and 39.65 % by mass of water 1. A quick reaction takes place (at 90-120 °C), the quicklime powder (CaO) 6 and the flaked cellulose in the reactor 7 becomes hydrophobic after the reaction has taken place, the material becomes insoluble in water. The steam generated during the reaction is passed through the dust separator cyclone 8 to the precipitating space 15, then through the water tank 21 back to the reactor 7. The hydrophobic mixture is sieved with a bolting cloth or with drum sieve having mesh size 2 mm, then the retained cellulose having a specific gravity of 80-100 kg/m3 may be used for absorbing oil floating on water, while the hydrophobic powder having a specific gravity of about 450 kg/m3 may be used as additive in construction materials, e.g. in smoothing plaster or in paints.

### Example 3:

### Hydrophobization of sawdust:

38.4 % by mass of quicklime powder 6 is mixed with 21.4 % by mass of fir sawdust preferably, then the hydrating suspension 5 is added during continuous agitation, which is a mixture of 45.2 % by mass of sunflower oil 2, 0.6 % by mass of emulsifier 3 and 34.4 % by mass of water 1. A quick reaction takes place (at 90-120 °C), the quicklime powder (CaO) 6 and the sawdust in the reactor 7 becomes hydrophobic after the reaction has taken place, the material becomes insoluble in water. The steam generated during the reaction is passed through the dust separator cyclone 8 to the precipitating space 15, then through the water tank 21 back to the reactor 7. The mixture thus produced may be used as additive for improving the hydrophobic property, e.g. in structural concrete, it increases the compression strength and makes the concrete hydrophobic.

### Example 4:

### Hydrophobization of perlite:

45.2 % by mass of quicklime powder 6 is mixed in a reactor with 13.61 % by mass of perlite, then the hydrating suspension 5 is added during continuous agitation, which is a mixture of 5.12 % by mass of sunflower oil 2, 0.57 % by mass of emulsifier 3 and 35.5 % by mass of water 1. A quick reaction takes place (at 90-120 °C), the quicklime powder (CaO) 6 and the perlite in the reactor 7 becomes hydrophobic after the reaction has taken place, the material becomes insoluble in water. The steam generated during the reaction is passed through the dust separator cyclone 8 to the precipitating space 15, then through the water tank 21 back to the reactor 7. The mixture thus produced may be used as hydrophobic additive in construction materials, and as hydrophobic oil absorbent.

### Examples for the application of hydrophobic additives and materials produced during the method:

### Example 5:

### Impermeable mortar dry mixture:

20 % by mass of cement is mixed with 7 % by mass of hydrophobic mixture mentioned in Example 1, and 73 % by mass of sand is added for producing impermeable mortar.

### Example 6:

### Producing hydrophobic concrete:

20 % by mass of cement is mixed with 10 % of hydrophobic mixture mentioned in Example 3, and 70 % by mass of sandy gravel is added for producing hydrophobic concrete.

### Example 7:

### Producing hydrophobic smoothing plaster:

17.5 % by mass of cement is mixed with 6.5 % of hydrophobic powder mixture mentioned in Example 3, having a specific gravidity of 450 kg/m3, and 76 % by mass of fine grained sand is added for producing hydrophobic smoothing plaster.

### Example 8:

### Application of hydrophobic cellulose based oil absorbent:

The hydrophobic cellulose based oil absorbent produced according to Example 2 has a granulate form, and it excludes water almost entirely thanks to its hydrophobic nature, but the oil is catched, absorbed between the cellulose fibres as a result of the material properties. The absorbing process takes place very quickly - within a few minutes, - and then the granulates can be collected and transported away. 12-14 gram hydrophobic cellulose based oil absorbent produced according to the example is necessary for absorbing 100 ml oil. Most of the oil, about 70 % of it, can be recovered from the used oil absorbing granulate. The recovered oil can be used again, and at the same time, the cellulose granulates containing residual oil can be recycled to the reactor performing the original production.

The advantage of the method according to the invention is that much more materials can be made hydrophobic relative to the solutions know before, as a result of which the materials produced with the method can be used as hydrophobizing materials in the construction industry, as well as in the field of environmental protection, e.g. as oil absorbent material in a wide range of applications.

Most of the quantity of oil absorbed can be recovered from the oil absorbent granulate. The oil recovered in this way can be used again, and the cellulose granulates containing residual oil can be recycled to the reactor performing the original production.

### List of references:

1 - water
2-oil
3 - emulsifier
4 - hydrophobizing material
5 - suspension
6 - quicklime powder (CaO)
7 - reactor
8 - dust separating cyclone
9 - mixture
10 - powder
11 - precipitated water
12 - drum sieve
13 - product
14 - product
15 - precipitating space

21 - water tank
22 - tank
23 - tank
24 - tank
25 - tank
26 - tank
27 - tank
28 - tank
29 - tank
30 - tank

## Claims

1. Method for producing of hydrophobic and impermeable products and additives, primarily for producing products that can be used in the construction industry and in the filed of environmental protection, during the method of which the powder material having a suitable particle structure is made hydrophobic,
**characterised by** that,
while performing the method, quicklime powder (6) is mixed in a suitable reactor (7) with any absorbent additive powder having 0-8 mm particle size, then hydrating suspension (5) is added to it while agitating continuously, which is a mixture of vegetable oil (2), emulsifier (3) and water (1), as a result of which a quick exothermic reaction takes place in the given case at 90-120 °C, the quicklime powder (6) in the reactor and the admixed additive becomes hydrophobic after the reaction has taken place, the produced material is insoluble in water, and the steam generated during the reaction is passed through a dust separating cyclone (8) into a precipitating space (15), then through a water tank (21) back into the reactor (7), and in this way, hydrophobic materials are produced during the reaction, which can be used in the construction industry as hydrophobic additives, as well as reusable oil absorbers in certain cases.

2. Method according to claim 1, **characterised by** that, the hydrophobic material (4) granulate, powder is preferably, in the given case, diatomaceous earth and/or perlite and/or bentonite and/or flaked cellulose and/or sawdust.

3. Method according to claim 1 or 2, **characterised by** that, during the method the materials are used as below:
- quicklime powder (6) 20-80 % by mass,
- material to be hydrophobized (4) 0-50 % by mass,
- suspension (5) 20-80 % by mass.

4. Method according to any of the claims 1 - 3, **characterised by** that, the composition of suspension (5) used during the method:
- vegetable oil (2), or mixture of vegetable oils, containing at least 12 % saturated fatty acid, preferably sunflower oil or palm fat 3-10 % by mass,
- emulsifier (3) 0.3-1 % by mass,
- water (1) 89-96.7 % by mass.

5. Method according to any of the claims 1 - 4, **characterised by** that, during the method 52.5 % by mass of quicklime powder (6) is mixed in the reactor (7) with 3.5 % by mass of flaked cellulose for producing the hydrophobic additive (10), then the hydrophobizing suspension (5) is added during continuous agitation, which is a mixture of 4.24 % by mass of vegetable oil (2), 0.56 % by mass of emulsifier (3) and 39.2 % by mass of water (1), while a quick exothermic reaction takes place in this case at 90-120 °C, and the quicklime powder (6) and the flaked cellulose in the reactor (7) becomes hydrophobic upon completion of the reaction, and the produced material in insoluble in water, the steam generated during the reaction is passed through the dust separator cyclone (8) to a precipitating space (15), then through the water tank (21) back to the reactor (7), and the mixture produced in this way is used as hydrophobic additive (10) in construction materials, e.g. plaster or estrich or concrete.

6. Method according to any of the claims 1 - 4, **characterised by** that, during the method 44 % by mass of quicklime powder (6) is mixed in the reactor (7) with 8.45 % by mass of flaked cellulose for producing the hydrophobic oil absorbent, then the hydrophobizing suspension (5) is added during continuous agitation, which is a mixture of 7.12 % by mass of sunflower oil (2), 0.78 % by mass of emulsifier (3) and 39.65 % by mass of water (1), while a quick exothermic reaction takes place in this case at 90-120 °C, and the quicklime powder (6) and the flaked cellulose in the reactor (7) becomes hydrophobic upon completion of the reaction, and the produced material in insoluble in water, the steam generated during the reaction is passed through the dust separator cyclone (8) to a precipitating space (15), then through the water tank (21) back to the reactor (7), then the obtained hydrophobic mixture is passed through bolting cloth or drum sieve (12) preferably having 2 mm mesh size, then the retained hydrophobic cellulose, having a specific gravity of 80-100 kg/m3, is used for absorbing oil floating on water, while the fine hydrophobic powder, having a specific gravity of about 400 - 450 kg/m3, is used as additive of construction materials, mixed in, for example, in smoothing plaster and paints.

7. Method according to any of the claims 1 - 4, **characterised by** that, 38.4 % by mass of quicklime powder and 21.4 % by mass of preferred fir sawdust is mixed in the reactor (7) during the process of hydrophobization of sawdust, then the hydrophobizing suspension (5) is added during continuous agitation, which in this case is a mixture of 45.2 % by mass of sunflower oil (2), 0.6 % by mass of emulsifier (3) and 34.4 % by mass of water (1), while a quick exothermic reaction takes place in this case at 90-120 °C, and the CaO and the sawdust in the reactor (7) becomes hydrophobic upon completion of the reaction, and the produced material in insoluble in water, the steam generated during the reaction is passed through the dust separator cyclone (8) to a precipitating space (15), then through the water tank (21) back to the reactor (7), and the mixture produced in this way is used as additive for improving the hydrophobic property, e.g. in structural concrete, which increases the compression strength and provides hydrophobic property to the concrete.

8. Method according to any of the claims 1 - 4, **characterised by** that, 45.2 % by mass of quicklime powder and 13.61 % by mass of perlite is mixed in the reactor (7) during the process of hydrophobization of perlite, then the hydrophobizing suspension (5) is added during continuous agitation, which in is a mixture of 5.12 % by mass of sunflower oil (2), 0.57 % by mass of emulsifier (3) and 35.5 % by mass of water (1), while a quick exothermic reaction takes place in this case at 90-120 °C, and the CaO and the perlite in the reactor (7) becomes hydrophobic upon completion of the reaction, and the produced material in insoluble in water, the steam generated during the reaction is passed through the dust separator cyclone (8) to a precipitating space (15), then through the water tank (21) back to the reactor (7), and the mixture produced in this way is used as hydrophobic additive in construction material, or as hydrophobic oil absorbent.

9. Method for the application of products produced by method according to any of the claims 1 - 8, **characterised by** that, the hydrophobic additives and materials produced during the method are used as dry mix of impermeable mortar, for the production of which dry mix of impermeable dry mix mortar, 20 % by mass of cement is mixed with 7 % by mass of hydrophobic mixture produced according to claim 5, and 73 % by mass of sand is added to produce impermeable dry mix mortar.

10. Method for the application of products produced by method according to any of the claims 1 - 8, **characterised by** that, the hydrophobic additives and materials produced during the method are used for the production of hydrophobic concrete, for the production of which hydrophobic concrete, 20 % by mass of cement is mixed with 10 % by mass of hydrophobic mixture, and 70 % by mass of sand is added to produce hydrophobic concrete.

11. Method for the application of products produced by method according to any of the claims 1 - 8, **characterised by** that, the hydrophobic additives and materials produced during the method are used for the production of hydrophobic smoothing plaster, for the production of which hydrophobic smoothing plaster, 17.5 % by mass of cement is mixed with 6.5 % by mass of hydrophobic powder, having a specific gravity of 450 kg/m3, produced according to claim 6, and 76 % by mass of fine sand is added to produce hydrophobic smoothing plaster.

12. Method for the application of products produced by method according to any of the claims 1 - 8, **characterised by** that, the hydrophobic additives and materials produced during the method are used for the production of hydrophobic cellulose based oil absorbent, which hydrophobic cellulose based oil absorbent is a hydrophobic cellulose based oil absorbent produced according to claim 6, appearing in the from of granulate, which excludes water almost entirely thanks to its hydrophobic nature, but the oil is catched, absorbed among the cellulose fibres as a result of its material properties, and the absorbing process takes place very quickly - within a few minutes - and then the granulates can be collected and transported away.
